Europäisches Patentamt

European Patent Office

Office européen des brevets

(19)

(11) Veröffentlichungsnummer: **0 008 705**
B1

(12) **EUROPÄISCHE PATENTSCHRIFT**

(45) Veröffentlichungstag der Patentschrift: **23.06.82**

(21) Anmeldenummer: **79102926.7**

(22) Anmeldetag: **13.08.79**

(51) Int. Cl.³: **B 29 F 3/04,** B 29 F 1/03

(54) **Volumenarme Mehrwellenschneckenmaschinenaustrittsvorrichtung mit Siebwechselvorrichtung.**

(30) Priorität: **23.08.78 DE 2836847**

(43) Veröffentlichungstag der Anmeldung:
**19.03.80 Patentblatt 80/6**

(45) Bekanntmachung des Hinweises auf die Patenterteilung:
**23.06.82 Patentblatt 82/25**

(84) Benannte Vertragsstaaten:
**DE GB IT NL**

(56) Entgegenhaltungen:
DE - A - 1 729 189
DE - A - 2 104 987
DE - B - 1 919 269
DE - U - 7 128 674
US - A - 3 684 419
US - A - 4 025 434

(73) Patentinhaber: **BAYER AG**
**Zentralbereich Patente, Marken und Lizenzen**
**D-5090 Leverkusen 1, Bayerwerk (DE)**

(72) Erfinder: **Ullrich, Martin, Dipl.-Ing.**
**Bamberger Strasse 3**
**D-5090 Leverkusen (DE)**
Erfinder: **Gemperlein, Heinz, Dipl.-Ing.**
**c/o Bayer Industria S.A. Casilla 1888**
**Lima (PE)**

# 0 008 705

## Volumenarme Mehrwellenschneckenmaschinenaustrittsvorrichtung mit Siebwechselvorrichtung

Die Erfindung betrifft eine volumenarme Mehrwellenschnekkenmaschinenaustrittsvorrichtung für hochviskose Stoffe am Ausstoßende einer Mehrwellenschnecke mit einer darin angeordneten Siebwechselvorrichtung.

Mit Schneckenmaschinen kann ein Strom hochviskoser Substanz gleichmäßig und formgebend ausgestoßen werden. Plastische und viskoelastische Massen können durch Fremdkörper, wie z.B. Schmutz- oder Rostteilchen, verunreinigt sein. Das Aussieben von unerwünschten Feststoffen erfolgt durch einen Filterprozeß mit Hilfe feiner Siebe, die den Durchfluß der plastischen oder viskoelastischen Masse gestatten, die Festkörperteilchen jedoch zurückhalten. Siebwechselvorrichtungen mit runden Siebtellern sind bekannt; sie werden mit passenden Adaptern und Zwischenstücken auf den Extruderflansch montiert. Der Hauptkörper ist mit einer hydraulisch betätigten Schiebeplatte und einem Dichtungssystem ausgestattet. Zum Siebwechsel wird eine Kassette mit zwei darin angebrachten Sieben durch eine unter hoher Anpressung stehende Kassettenführung von einer Hydraulik quer durch den Schmelzestrom geschoben, wobei das erste bereits verschmutzte, mit Fremdpartikeln belegte Sieb aus dem Schmelzestrom entfernt und das zweite frische Sieb in den Schmelzestrom verlegt wird. Der Siebwechselvorgang geschieht unter hoher statischer, axialer Pressung der Schiebeflächen, damit möglichst keine Schmelze seitlich austritt. Es ist auch eine Siebwechselvorrichtung bei einer zweiwelligen Knetscheibenschneckenpresse bekannt. Aber auch in diesem Fall ist der Siebquerschnitt kreisförmig. Es wurde dafür ein "8-auf-rund-Stück" entwickelt, das zwischen den Schneckenspitzen und der Lochplatte eingebaut wird. Der Stromquerschnitt muß nach der runden Siebebene erneut auf den Querschnitt der jeweiligen Düsenform, z.B. einer Lochleiste verändert werden. Es hat sich gezeigt, daß bei Schneckenprozessen thermisch empfindliche Polymere am Ende eines Schneckenprozesses so hoch beinsprucht sind, daß das Volumen des "8-auf-rund-Stücks" der Siebvorrichtungen und der Düse als schädlicher Raum anzusehen ist. Während im Bereich der Schneckenwellen, insbesondere bei gleichsinnig rotierenden, dichtkämmenden Mehrwellenschnecken (s. z.B. H. Herrmann, Schneckenmaschinen in der Verfahrenstechnik, Springer, Berlin, Heidelberg, New York, 1972, Seite 120 ff.) eine ständige, kinematisch zwingende Selbstreinigung und Zwangsförderung herrscht, wird der Stoff im Raum zwischen dem Schneckenwellenende und den Düsenbohrungen lediglich durch den von der Schnecke erzeugten Druck in einer laminaren Strömung, aber ohne mechanischen Zwang und Selbstreinigung, transportiert. Dieser Übergangsraum von der Schneckenkontur zu den Düsenbohrungen ist unvermeidlich; er hat ein breiteres Verweilzeitspektrum zur Folge und birgt die Gefahr einer Stoffschädigung.

Aufgabe der Erfindung ist eine volumenarme Mehrwellenschneckenmaschinenaustrittsvorrichtung mit Siebwechselvorrichtung, insbesondere eine volumenarme Zweiwellenschneckenmaschinenaustrittsvorrichtung mit Siebwechselvorrichtung. Die Aufgabe wird dadurch gelöst, daß die Vorrichtung im wesentlichen aus drei Körpern A, B und C besteht, der Körper C, eine an sich bekannte ein- oder mehrreihige Lochleiste, fest mit dem Körper B verbunden ist und die Körper A und B durch eine Führung in Achsrichtung der Schnecken mit einer Anpress- und Lockerungshydraulik relative zueinander beweglich sind, daß der Körper A am Schneckengehäuse befestigt ist, wobei die Enden der Schnecken in den Innenraum von A hineinragen, daß der durchgehende Hohlraum durch die Körper A, B, C so ausgestaltet ist, daß die sich berührenden Querschnittsflächen gleich sind und daß der dem Schneckenquerschnitt entsprechend geformte Innenraumquerschnitt im stromaufwärts gelegenen Teil des Körpers A ohne Umweg über einen runden Querschnitt direkt in den langlochförmigen Querschnitt an der Berührungsfläche der Körper B und C übergeht, daß das Sieb in einer Kassette zwischen den beiden Körpern A und B ist, wobei die wirksame Siebfläche mit der Querschnittsform der Hohlräume in den Körpern A und B an ihrer Berührungsfläche übereinstimmt und die Kassette durch die Anpress- und Lockerungshydraulik im angepreßten Zustand abgedichtet ist und im gelockerten Zustand senkrecht zu den Schneckenachsen durch eine Verschiebehydraulik in der gleichen Richtung verschiebbar ist und daß jede Kassette nur ein Sieb enthält. Eine bevorzugte Zweiwellenschneckenmaschinenaustrittsvorrichtung mit Siebwechselvorrichtung ist dadurch gekennzeichnet, daß der 8-förmige Querschnitt des Innenraums A ohne Umweg über einen runden Querschnitt direkt in den langlochförmigen Querschnitt zwischen den Körpen B und C übergeht.

Die Erfindung ist im folgenden weiter beispielhaft beschrieben und in der Zeichnung dargestellt. Es zeigen:

Figur 1 einen Längsschnitt durch eine volumenarme Zweiwellenschneckenmaschinenaustrittsvorrichtung mit Siebwechselvorrichtung;

Figur 2 den 8-förmigen Querschnitt der Doppelschnecke;

Figur 3 den langgestreckten Querschnitt der Lochleiste;

Figur 4 den Querschnitt einer zweireihigen Lockleiste;

Figur 5 die offene Strömungsquerschnittsfläche in Position der Siebwechselvorrichtung;

Figur 6 die Siebkassette;

Figur 7 einen Schnitt durch die Siebkassette;

Figur 8 die Verschiebevorrichtung für die Siebkassetten.

2

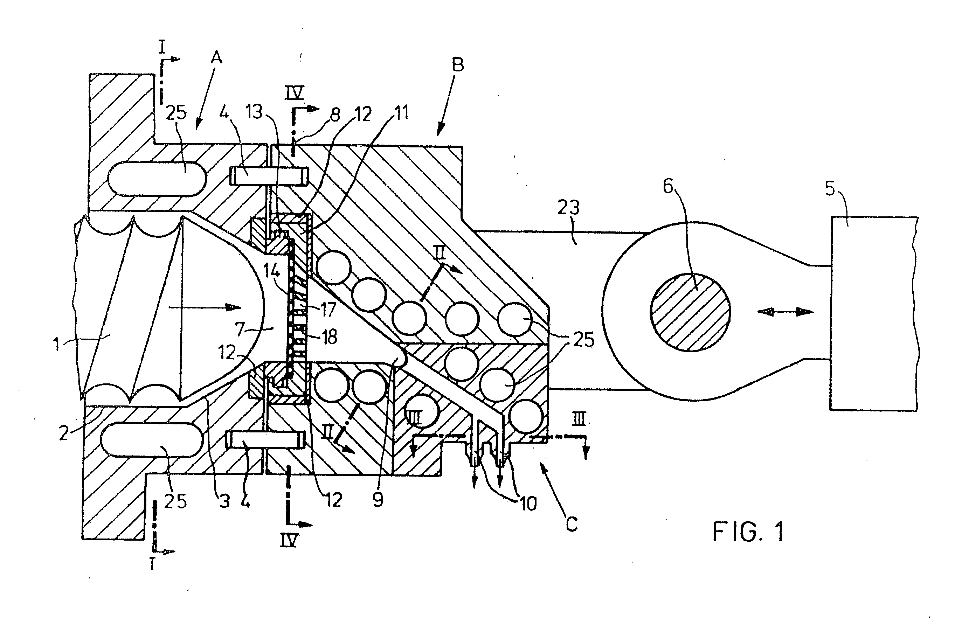

Der Längsschnitt in Figur 1 zeigt die drei Körper A, B, C der Schneckenmaschinenaustrittsvorrichtung. Die beiden nebeneinanderliegenden kämmenden Schneckenwellen 1 ragen mit ihrem 8-förmigen Querschnitt 2 in den Körper A des volumenarmen Düsenkopfes. Unmittelbar am Ende der Schnekkenwellen beginnt der Querschnittsübergang 3 von der 8-auf die Schlitzform. Die Schneckenspitze ragt in den Körper A hinein. Der Körper B ist über Führungsstifte 4, die eine axiale Verschiebung erlauben, in seiner Position zum Körper A justiert. Die axial wirkende Lockerungsund Anpreßhydraulik 5 greift mittig und punktförmig zentral am Bolzen 6 des Körpers B an. Es ist selbstverständlich, daß die von der Anpreßhydraulik 5 über den Körper B auf den Körper A übertragenen Druckkräfte in einem hier nicht dargestellten äußeren von der Hydraulik 5 auf den Körper A übergreifenden Joch und darin als Zugkräfte aufgefangen werden.

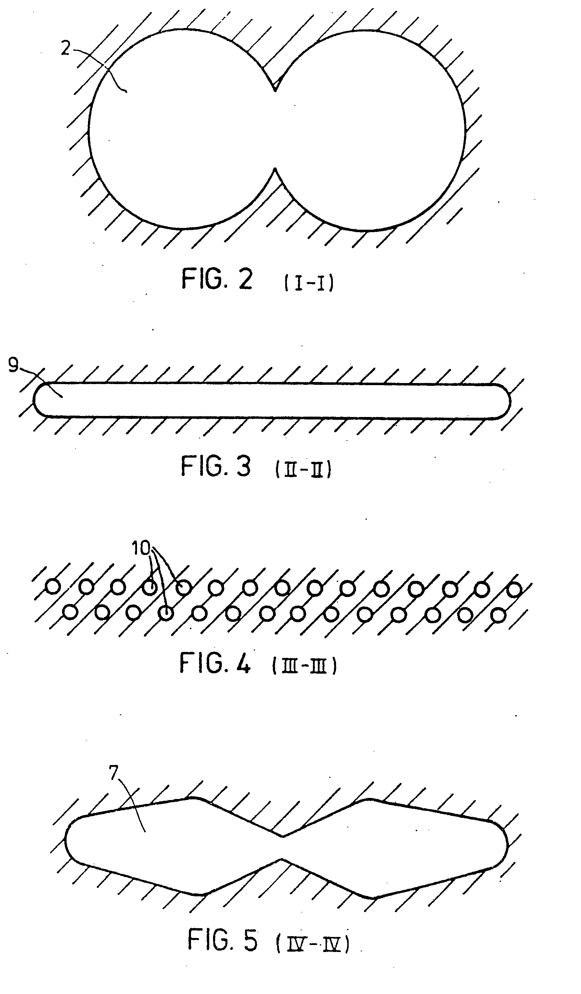

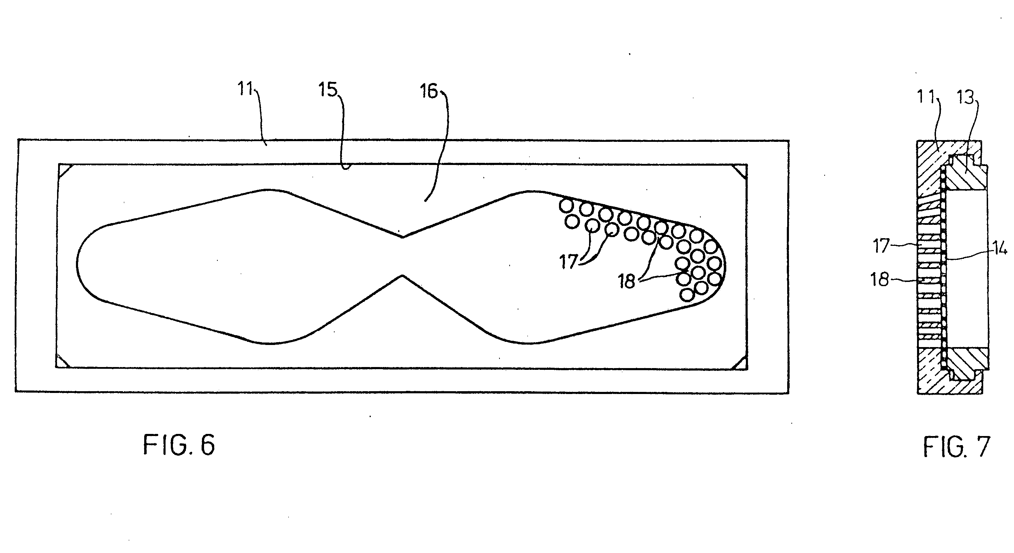

Während sich der mit Schmelze gefüllte Raum im Körper A vom 8-förmigen Schneckenquerschnitt 2 (s. auch Schnitt I—I in Figur 2) auf die Querschnittsfläche 7 (s. auch Figur 5: Schnitt IV—IV) der Siebebene 8 verändert, geht im Körper B der Siebquerschnitt 7 über in den schlitzartigen Querschnitt 9 (s. Figur 3: Schnitt II—II). Dieser Querschnitt 9 wird in dem Körper C aufgefächert in Düsenbohrungen 10. Die hier zweireihige zickzackförmige Anordnung der Düsenbohrungen 10 ist im Schnitt III—III in Figur 4 nochmals dargestellt. Zwischen den Körpen A und B befindet sich die Siebkassette 11 in einer Kassettenführung 12. Die Kassette 11 ist in Draufsicht und im Schnitt in den Figuren 6 und 7 noch einmal getrennt dargestellt. Die Kassette besteht aus zwei Teilen, der eigentlichen Kassette 11 und dem Andruckrahmen 13, zwischen denen das Sieb 14, bestehend aus dem eigentlichen Sieb und einem stromabwärts dahinterliegenden groben Stützsieb, eingespannt ist. Das einzulegende Sieb braucht nicht die komplizierte Umfangskontur des Querschnitts 7 zu haben; es ist so groß, daß es in die Aussparung 15 der Kassette 11 eingelegt wird. Im zusammengepreßten Zustand ist dann eine Teilfläche 16 dieses einfachen Rechtecksiebes abgedeckt, während die Schmelze stetig und strömungsgünstig alle genannten Querschnittsformen von der 8-förmigen Doppelschnecke 1 bis zu den Düsenbohrungen 10 durchläuft. Im Kassettenkörper 11 ist stromabwärts vom eingespannten Sieb 14, also anschließend an das oben genannte grobe Stützsieb, eine von zahlreichen Bohrungen 17 durchsetzte Stützplatte 18 angeordnet. Diese Stützplatte 18 ist in das Metall der Kassette 11 eingearbeitet, hat die Kontur der Umfangsfläche 7 und die Funktion, die Schmelzdruckkräfte auf das Feinsieb und das Stützsieb aufzufangen über die Kassette in den Körper B einzuleiten.

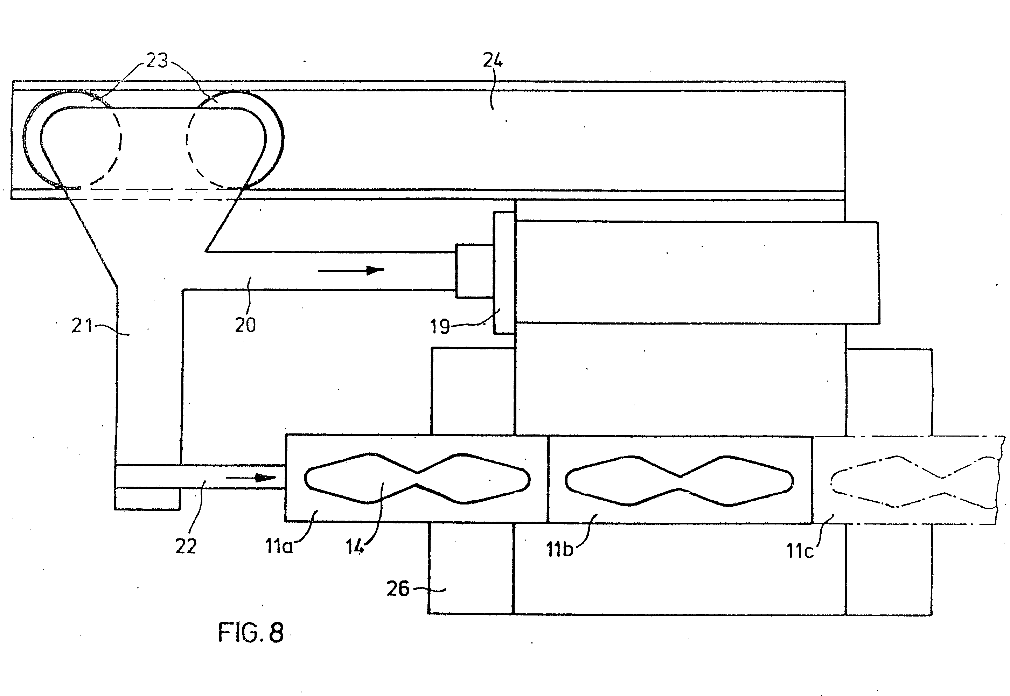

Figur 8 zeigt die quer zur Schneckenachse 1 wirkende Verschiebehydraulik 19, welche Sekundenbruchteile nach dem Lockern der axialen Anpreßhydraulik 5 eine frische Kassette 11a mit einem sauberen Sieb 14 nach rechts in den Schmelzestrom hineinschiebt und dabei das bereits durch Fremdpartikel belegte Sieb 11b aus dem Schmelzestrom heraus nach rechts in die Entnahmeposition 11c verschiebt. Ein Anschlag sorgt dafür, daß das frische Sieb mit seiner Kassette genau in die richtige Schmelzestromposition 11b gelangt, wonach sofort wieder die axiale Anpreßhydraulik 5 die beiden Körper A und B mit der dazwischenliegenden Kassette 11 zusammenpreßt. Der automatisierte Siebwechselvorgang dauert insgesamt etwa 1,5 Sekunden. Es ist zweckmäßig, die Kassetten 11 immer an der gleichen Seite aufzugeben und an der anderen zu entnehmen. Die axial Lockerungshydraulik 5 reduziert nur die Anpreßkraft, es handelt sich um eine praktisch weglose Entlastung der Anpressung, deswegen tritt während des kurzzeitigen Siebwechsels nur eine sehr geringe Menge an Schmelze seitlich an der Kassettenführung nach außen. Die Verschiebehydraulik 19 oberhalb des Düsenkopfes mit einer Kraftübertragung über die Zugstange 20, die Verbindung 21 und die Druckstange 22, sowie die Querkraftaufnahme über die Rollen 23 in der Rollenbahn 24 ist ein mögliches Ausführungsbeispiel. Es hat den Vorteil eines seitlich raumsparenden Aufbaus.

Zur Temperierung der Austrittsvorrichtung sind in den Körpern A, B und C gün stig verteilte Bohrungen 25 zum Durchströmen der Teile mit einem flüssigen oder dampfförmigen Wärmeträger vorgesehen. Die Vorrichtung kann aber auch durch eleketrische Widerstandsheizung temperiert werden. Die frische Kassette 11a muß vor dem Einlegen in die Kassettenlaufbahn 26 auf Schmelzetemperatur vorgewärmt sein. Zur Warmhaltung der frischen Kassette 11a bis zum kurz nach dem Einlegen erfolgenden Siebwechsel ist auch die Kassettenlaufbahn 26 beheizbar.

Die erfindungsgemäße Vorrichtung hat gegenüber dem Stand der Technik folgende Vorteile:

1) Die Schneckenmaschinenaustrittsvorrichtung ist volumenarm. Bei einer Doppelschnecke mit 120 mm Schneckendurchmesser Adapterstückchen, runder Siebebene und Extrusion nach unten beträgt das Produktvolumen ca. 5,2 1; bei der erfindungsgemäßen Zweiwellenschneckenmaschinenaustrittsvorrichtung entfallen die Adapterstrüke, das Produktvolumen vermindert sich auf ca. 1,3 1. Der "schädliche Raum" hat sich somit auf etwa 1/4 verringert, die Verweilzeit in diesem nicht zwangsweise gereinigten, nur laminar durchströmten Düsenkörper hat sich auch etwa um den Faktor 4 verkleinert.

2) Weil das Sieb in einem Bereich liegt, wo der Querschnitt noch verhältnismäßig groß ist, erhöhen sich die Siebstandzeiten zwischen 2 Siebwechseln. Die wirksame Siebquerschnittsfläche (in Figur 6 hat sie etwa die Form eines "Hundeknochens") ist größer als wenn der Querschnitt des Hohlraums auf einen Kreis verändert werden muß.

3) Der Einbau eines Siebes in einer eigenen Kassette und die seitliche Verschiebung dieser Kassetten stets in der selben Richtung bringt bei jedem Siebwechsel saubere Kassettenflächen durch den Schmelzestrom. Verschmutze Siebe und Kassetten verlassen den Produktstrom

**0 008 705**

immer an der selben Seite, saubere Kassetten und Siebe kommen stets von der anderen Seite nach. Es wird dadurch eine Verschmutzung der Schmelze vermieden, denn eine Reinigung der Kassette von den unvermeidlich auftretenden Crack-Produkten wäre sonst, z.B. bei einer Hin- und Herbewegung ein- und derselben Doppelkassette mit vergleichbarem Aufwand nicht möglich.

4) Die axial wirkende Anpreß- und Lockerungshydraulik ermöglicht durch die praktisch weglose Entlastung der Anpressung eine leichtgängige Seitenverschiebung der Siebkassette ohne sehr große Verschiebekräfte. Deswegen braucht eine Siebkassette nicht so stabil und dick zu sein wie eine solche, die unter voller Anpressung mit erheblich größeren Kräften geschoben werden muß; das bedeutet wiederum eine Volumeneinsparung von "schädlichem Raum", und durch die leichtgängige Seitenverschiebung ohne hohe axiale Anpressung wird die Kassettenführung durch Fremdpartikel (Riefenbildung) weniger geschädigt.

**Patentansprüche**

1. Volumenarme Mehrewellenschneckenmaschinenaustrittsvorrichtung mit Siebwechselvorrichtung, dadurch gekennzeichnet, daß sie im wesentlichen aus drei Körpen A, B und C besteht, der Körper C eine an sich bekannte ein- oder mehrreihige Lochleiste ist, der fest mit dem Körper B verbunden ist, und die Körper A und B durch eine Führung (4) in Achsrichtung der Schnecken (1) mit einer Anpreß- und Lockerungshydraulik (5) relative zueinander beweglich sind, daß der Körper A am Schneckengehäuse befestigt ist, wobei die Enden der Schnecken (1) in den Innenraum von A hineinreichen, daß der durchgehende Hohlraum durch die Körper A, B, C so ausgestaltet ist, daß sich berührende Querschnittsflächen (7,9) gleich sind und daß der dem Schneckenquerschnitt entsprechend geformte Innenraumquerschnitt im stromaufwärts gelegenen Teil des Körpers A ohne Umweg über einen runden Querschnitt direkt in den langlochförmigen Querschnitt an der Berührungsfläche der Körper B und C (9) übergeht, daß das Sieb (14) in einer Kassette (11) zwischen den beiden Körpern A und B ist, wobei die wirksame Siebfläche mit der Querschnittsfläche (7) der Hohlräume in den Körpern A und B an ihren Berührungsflächen übereinstimmt, und die Kassette (11) durch die Anpreß- und Lockerungshydraulik (5) im angepreßten Zustand abgedichtet ist und im gelockerten Zustand senkrecht zu den Schneckenachsen (1) durch eine Verschiebehydraulik (19) in der gleichen Richtung verschiebbar ist und daß jede Kassette (11) nur ein Sieb (14) enthält.

2. Zweiwellenschneckenmaschinenaustrittsvorrichtung mit Siebwechselvorrichtung nach Anspruch 1, dadurch gekennzeichnet, daß der 8-förmige Querschnitt (2) des Innenraums A ohne Umweg über einen runden Querschnitt direkt in den langlochförmigen Querschnitt (9) zwischen den Körpern B und C übergeht.

**Revendications**

1. Dispositif de faible volume situé à la sortie d'une machine à vis sans fin à plusieurs arbres avec un dispositif de remplacement des cribles, caractérisé par le fait qu'il comprend pour l'essentiel trois corps A, B et C, le corps C étant une barrette perforée connue en soi à une opu plusieurs rangées assujettie au corps B, et les corps A et B pouvant être déplacés l'un par rapport à l'autre dans le sens de l'axe des vis sans fin, grâce à un dispositif de guidage (4), par un mécanisme hydraulique (5) de pression et de desserrement, par le fait que le corps A est fixé au carter des vis sans fin, les extrémités des vis sans fin (1) pénétrant dans l'espace interne de A, par le fait que la cavité traversant les corps A, B, C est configurée de telle sorte que des surfaces de sections (7,9) contiguës soient identiques et que la section de l'espace interne, de forme correspondant à celle de la section des vis sans fin, se prolonge, directement et sans transition par une section ronde, dans la zone du corps A située en amont, par la section oblongue à la surface de contact des corps B et C (9), par le fait que le crible (14) se trouve dans une cassette (11) entre les deux corps A et B, la surface efficace du crible coïncidant alors avec la surface de la section (7) des cavités dans les corps A et B à leurs surfaces de contact, ladite cassette (11) étant isolée hermétiquement, à l'état pressé, par le mécanisme hydraulique (5) de pression et de desserrement, et pouvant être déplacée dans la même direction à l'état relâché, par un mécanisme hydraulique de déplacement (19), perpendiculairement aux axes (1) des vis sans fin, et par le fait que chaque cassette (11) ne contient qu'un seul crible (14).

2. Dispositif situé à la sortie d'une machine à vis sans fin à deux arbres avec un dispositif de remplacement des cribles, selon la revendication 1, caractérisé par le fait que la section (2), en forme de 8, de l'espace interne A se prolonge, directement et sans transition par une section ronde, par la section oblongue (9) entre les corps B et C.

**Claims**

1. A small volume outlet apparatus with a sieve changing apparatus for multiple shaft screw machines, characterised in that it consists substantially of three bodies A, B and C, the body C is a peforated ridge in one or more rows known *per se* which is rigidly fixed to the body B, and the bodies A

4

and B can be moved relatively to one another through a guide 4 in the axial direction of the screws 1 by means of a hydraulic pressure and release device 5, in that the body A is fixed to the screw housing, the ends of the screws 1 penetrating into the interior of A, in that the continuous cavity through the bodies A, B, C is designed in such a way that contacting cross-sectional faces 7, 9 are identical and the interior cross-section of the section of body A lying upstream, which is shaped to correspond with the cross-section of the screw, passes without a detour via a round cross-section directly into the slot-shaped cross-section at the contacting face between the bodies B and C (9), in that the sieve 14 is in a cassette 11 between the two bodies A and B, the effective sieve area coinciding with the cross-sectional area 7 of the cavities in the bodies A and B on their contacting faces and the cassette 11 being sealed in the pressed state by the hydraulic pressure and release device 5, and being movable in the same direction in the released state perpendicularly to the screw axes 1 by a hydraulic shifting device 19, and in that each cassette 11 contains only one sieve 14.

2. An outlet apparatus with a sieve changing apparatus for two-shaft screw machines according to Claim 1, characterised in that the figure-of-eight-shaped cross-section 2 of the interior A passes without detour via a round cross-section directly into the oblong-shaped cross-section (9) between the bodies B and C.

FIG. 1

0 008 705

FIG. 2  (I-I)

FIG. 3  (II-II)

FIG. 4  (III-III)

FIG. 5  (IV-IV)

FIG. 6

FIG. 7

FIG.8